# EUROPÄISCHE PATENTANMELDUNG

(11) **EP 3 159 629 A1**
(43) Veröffentlichungstag der Anmeldung: **26.04.2017**
(21) Anmeldenummer: 15190663.3
(22) Anmeldetag: 20.10.2015
(51) Int. Cl.: F25B 13/00, F25B 41/04, F25B 47/02, F16K 11/00, F16K 31/42

(54) **VIER-WEGE-VENTILANORDNUNG**

(71) Anmelder: Ulrich Brunner GmbH, 84307 Eggenfelden (DE)
(72) Erfinder: Brunner, Hubertus, 84307 Eggenfelden (DE)
(74) Vertreter: Rothkopf, Ferdinand

(57) **Zusammenfassung**

Bei einer Vier-Wege-Ventilanordnung mit einem ersten Durchflussweg und einem zweiten Durchflussweg ist der erste Durchflussweg vom zweiten Durchflussweg, thermisch getrennt gestaltet.

## Beschreibung

### Hintergrund der Erfindung

Die Erfindung betrifft eine Vier-Wege-Ventilanordnung mit einem ersten Durchflussweg und einem zweiten Durchflussweg.

Eine Vier-Wege-Ventilanordnung ist eine Schaltungsanordnung zum Absperren bzw. Steuern eines Durchflusses eines Mediums. Das Medium kann einen flüssigen oder gasförmigen Aggregatszustand, oder eine Mischung aus flüssigem und gasförmigem Aggregatszustand aufweisen. An der Vier-Wege-Ventilanordnung befinden sich vier Anschlüsse. Das Medium kann die Vier-Wege-Ventilanordnung auf mindestens einem ersten Durchflussweg und einem zweiten Durchflussweg durchfließen. Von den Anschlüssen sind je zwei einem ersten Durchflussweg und zwei einem zweiten Durchflussweg zugeordnet. So sind dann ein erster Durchflussweg zwischen zwei der Anschlüsse und ein zweiter Durchflussweg zwischen den zwei anderen Anschlüssen gebildet. Eine solche Ventilanordnung wird auch als Vier-Zwei-Wege-Ventilanordnung bezeichnet. Jeder Durchflussweg ist durch die Vier-Wege-Ventilanordnung hindurch ein Weg, der von dem Medium zu durchfließen ist. Nach einem Umschalten der Vier-Wege-Ventilanordnung wird diese vom Medium auf anderen Durchflusswegen durchströmt, etwa auf einem dritten und einem vierten Durchflussweg.

### Zugrundeliegende Aufgabe

Der Erfindung liegt die Aufgabe zugrunde, eine Vier-Wege-Ventilanordnung zu schaffen, die insbesondere für einen Wärmepumpenkreislauf bei einer Wärmepumpe geeignet ist.

### Erfindungsgemäße Lösung

Diese Aufgabe ist erfindungsgemäß mit einer Vier-Wege-Ventilanordnung mit einem ersten Durchflussweg und einem zweiten Durchflussweg geschaffen, bei dem der erste Durchflussweg vom zweiten Durchflussweg thermisch getrennt ist.

Bei derzeitigen Vier-Wege-Ventilanordnungen sind die Durchflusswege so gestaltet, dass ein sie im ersten Durchflussweg durchfließendes Medium bzw. Fluid ein hohes Maß an thermischer Energie aus einem anderen Durchflussweg aufnehmen kann. Bei der erfindungsgemäßen Vier-Wege-Ventilanordnung ist hingegen der erste Durchflussweg vom zweiten Durchflussweg thermisch getrennt. Mittels der thermischen Trennung nimmt der thermische Einfluss des ersten Durchflusswegs auf den zweiten Durchflussweg ab. Eine derartige Vier-Wege-Ventilanordnung ist, so hat sich erfindungsgemäß gezeigt, insbesondere für Wärmepumpenkreisläufe von Vorteil, wie nachfolgend zu den Ausführungsbeispielen noch genauer erläutert wird.

Der erste Durchflussweg und der zweite Durchflussweg sind erfindungsgemäß bevorzugt mittels eines Dämmmittels voneinander thermisch getrennt. Als Alternative zu einem Dämmmittel können die beiden Durchflusswege auch gezielt voneinander räumlich beabstandet angeordnet sein, um die erfindungsgemäß gewünschte thermische Trennung zu schaffen. Der Wärmeübergang vom ersten zum zweiten Durchflussweg und umgekehrt weist einen Wärmedurchgangskoeffizienten bzw. Wärmeübergangskoeffizienten auf. Je niedriger der Wärmedurchgangskoeffizient ist, umso geringer ist der Austausch von thermischer Energie von einem ersten Medium im ersten Durchflussweg zu einem zweiten Medium im zweiten Durchflussweg. Insbesondere bei Wärmepumpenkreisläufen ist aber eine thermische Beeinflussung zwischen bestimmten Durchflusswegen zu vermeiden. Diese thermische Beeinflussung würde dazu führen, dass das durchfließende Medium bzw. Fluid ungewollt thermische Energie aufnimmt oder abgibt. Diese thermische Energie kann dann von dem Wärmepumpenkreislauf nicht mehr genutzt werden. Wenn solche "Energieverluste" vermieden werden können, kann die Effizienz des zugehörigen Wärmepumpenkreislaufs gesteigert werden.

In bevorzugter Weise sind ferner auch ein dritter Durchflussweg und ein vierter Durchflussweg schaltbar, die ebenfalls thermisch getrennt sind. Das Fluid kann die Vier-Wege-Ventilanordnung dann nach einem Umschalten auf einem dritten Durchflussweg und/oder auf einem vierten Durchflussweg durchfließen. Diese beiden Durchflusswege sind ebenfalls thermisch getrennt, insbesondere mittels eines Dämmmittels. Auch dabei ist ein Austausch von thermischer Energie von dem Fluid im dritten Durchflussweg zu dem Fluid im vierten Durchflussweg oder zurück vermindert bzw. vermieden.

Erfindungsgemäß bevorzugt sind bei der Vier-Wege-Ventilanordnung ferner ein erster, zweiter, dritter und vierter Anschluss vorgesehen, wobei der erster Durchflussweg vom ersten zum zweiten Anschluss, der zweiter Durchflussweg vom dritten zum vierten Anschluss, der dritter Durchflussweg vom ersten zum vierten Anschluss und der vierter Durchflussweg vom zweiten zum dritten Anschluss führt. Mit den Anschlüssen ist die Vier-Wege-Ventilanordnung an ein Rohrsystem durchflussleitend anzubinden. Insbesondere bei einem Wärmepumpenkreislauf ist es mit den oben genannten Durchflusswegen möglich, eine Strömungsrichtung innerhalb des Wärmepumpenkreislaufs zu verändern. Besonders vorteilhaft ist es, zwei solche Vier-Wege-Ventilanordnungen in einem solchen Wärmepumpenkreislauf anzuordnen. So kann dann nach einem Umschalten in dem Wärmepumpenkreislauf ein Teilbereich von diesem Wärmepumpenkreislauf eine erste Strömungsrichtung aufweisen, während zugleich ein anderer Teilbereich des Wärmepumpenkreislaufs eine entgegengesetzte Strömungsrichtung hat.

In vorteilhafter Weise sind auch ein erstes Schaltelement in einer ersten Schaltstellung, dass den ersten Anschluss öffnet, und ein zweites Schaltelement, dass den dritten Anschluss verschließt, vorgesehen. Ein Schaltelement kann mehrere unterschiedliche Schaltzustände annehmen. In der Regel kann jedes Schaltelement zwei verschiedene Schaltzustände mit Freigabe bzw. Blockierung eines zugehörigen Durchflussweges annehmen. Ferner sind das erstes Schaltelement und das zweites Schaltelement vorzugsweise gemeinsam bewegbar, insbesondere verschiebbar gestaltet. Vorteilhaft werden dabei beide Schaltelemente mittels einer Stelleinrichtung zeitgleich bewegt. Mit dem gleichzeitigen Bewegen mittels einer einzigen Stelleinrichtung ist je nach Schaltzustand der erste Anschluss geöffnet und der dritte Anschluss verschlossen. Oder der erste Anschluss geschlossen und der dritte Anschluss geöffnet. Mit einem Öffnen und Verschließen von Anschlüssen der Vier-Wege-Ventilanordnung, wie es oben definiert ist, kann vorteilhaft mittels der Schaltelemente der Durchfluss durch die Durchflusswege der Vier-Wege-Ventilanordnung so verändert werden, dass insbesondere bei einem Wärmepumpenkreislauf von einer Strömungsrichtung teilweise zu einer entgegengesetzten Strömungsrichtung umzuschalten ist.

Besonders bevorzugt ist mindestens eines der Schaltelemente als ein Kolbenelement gestaltet. Ein solches Kolbenelement ist durch einfaches Verschieben zu verstellen und kann zugleich hohe Dichtwirkung erzielen. Das Kolbenelement ist vorteilhaft mit einem Kolbenkörper und einer Kolbenstange gebildet. Die Kolbenstange ist dabei bevorzugt ortsfest mit dem Kolbenkörper verbunden. Indem zwei Kolbenkörper mit einer gemeinsamen Kolbenstange verbunden sind, sind ein gemeinsames Bewegen beider Kolbenkörper und damit ein gleichzeitiges Stellen von zwei Kolbenelementen sehr einfach ermöglicht. So ist für zwei Kolbenelemente nur ein einziges Stellmittel notwendig. Es können also zwei Schaltelemente mit einem Stellmittel geschaltet werden. Dies ist in der vorliegend bevorzugten Anwendung bei einem Wärmepumpenkreislauf besonders vorteilhaft, weil dort insbesondere jeweils zwei Schaltelemente gleichzeitig zu schalten sind, um zwischen den Durchflusswegen zu wechseln.

In bevorzugter Weise ist das Kolbenelement selbst mit einem thermisch dämmenden Material gestaltet. Thermisch dämmendes Material verhindert, dass thermische Energie schnell durch das Material hindurchtritt. Der Dämmwert des Materials ist dabei ausschlaggebend für die Geschwindigkeit, in der die thermische Energie das Material durchdringt. Das thermisch dämmende Kolbenelement, welches vorteilhaft aus Kunststoffmaterial hergestellt ist, soll insbesondere je zwei zugehörige Durchflusswege voneinander trennen. Der Austausch von thermischer Energie wird so zwischen den derart thermisch getrennten Durchflusswegen auf sehr einfache Weise verringert. Das Kolbenelement hat somit eine Doppelwirkung als Ventil und als thermische Trennung. Dies steigert die Effizienz des Wärmepumpenkreislaufs. Insbesondere sind die Anschlüsse des jeweiligen Durchflussweges derart beabstandet von dem jeweilig anderen Durchflussweg angeordnet, dass allein durch diesen Abstand eine thermische Trennung entsteht. Die Rohrverbindungen innerhalb des Ventilbereichs sind insbesondere aus Edelstahl hergestellt. Edelstahl weist im Vergleich zu beispielsweise Kupfer oder Aluminium einen geringeren Wärmeleitwert auf. Daher ergibt sich mit Rohrverbindungen aus Edelstahl noch eine vergleichsweise schwache Wärmeableitung. Das für die Rohrverbindungen zu verwendete Material ist also vorteilhaft in Abhängigkeit seines Wärmeleitwertes auszuwählen, wobei ein möglichst geringer Wärmeleitwert anzustreben ist.

Herkömmliche Vier-Wege-Ventilanordnungen sind allgemein mit Flachschiebern ausgestattet und benötigen eine bestimmte Druckdifferenz, um eine Dichtwirkung zu erzielen. Diese Vier-Wege-Ventilanordnungen weisen sonst bei einer geringeren Druckdifferenz innere Undichtigkeiten auf. Die Undichtigkeiten führen zu einem möglichen Austausch zwischen dem ersten Medium im ersten Durchflussweg und dem zweiten Medium im zweiten Durchflussweg. Bei der erfindungsgemäßen Vier-Wege-Ventilanordnung ist ein Austausch zwischen dem ersten Medium im ersten Durchflussweg und dem zweiten Medium im zweiten Durchflussweg hingegen sicher verhindert. Ein Leistungsverlust aufgrund einer ansonsten bestehenden Undichtigkeit ist vermieden. Außerdem wären herkömmliche Vier-Wege-Ventilanordnungen nur in einer bestimmten Art und Weise in den hier zugrundeliegenden Kreislauf einzubauen.

Ferner ist die Erfindung auch gezielt auf ein Verwenden einer derartigen erfindungsgemäßen Vier-Wege-Ventilanordnung bei einem Wärmepumpenkreislauf gerichtet.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: eine Übersicht eines Wärmepumpenreislaufs gemäß dem Stand der Technik,
- Fig. 2: eine Übersicht eines erfindungsgemäßen Wärmepumpenreislaufs mit einem Abscheider und einer Pumpe,
- Fig. 3: eine Übersicht eines erfindungsgemäßen Wärmepumpenreislaufs mit einer Pumpe, die innerhalb des Abscheiders angeordnet ist.
- Fig. 4: eine Übersicht des erfindungsgemäßen Wärmepumpenreislaufs gemäß Fig. 3 im Heizbetrieb, mit einer Umschalteinrichtung,
- Fig. 5: eine Übersicht des erfindungsgemäßen Wärmepumpenreislaufs mit einer umgeschalteten Umschalteinrichtung, im Abtaubetrieb,
- Fig. 6: eine Übersicht des erfindungsgemäßen Wärmepumpenkreislaufs gemäß Fig. 3, bei dem die im Abscheider vorgesehene Pumpe als eine Schieberpumpe ausgeführt ist,
- Fig. 7: eine Detailansicht der Schieberpumpe gemäß Fig. 6,
- Fig. 8: eine Übersicht des erfindungsgemäßen Wärmepumpenkreislaufs gemäß Fig. 3 bei dem die im Abscheider vorgesehene Pumpe als eine Kolbenpumpe ausgeführt ist,
- Fig. 9: eine Detailansicht der Kolbenpumpe gemäß Fig. 8,
- Fig. 10: eine Übersicht eines erfindungsgemäßen Wärmepumpenreislauf gemäß Fig. 6 mit zwei Vier-Wege-Ventilanordnungen, und
- Fig. 11: eine Detailansicht der Vier-Wege-Ventilanordnung gemäß Fig. 10.

### Detaillierte Beschreibung des Ausführungsbeispiels

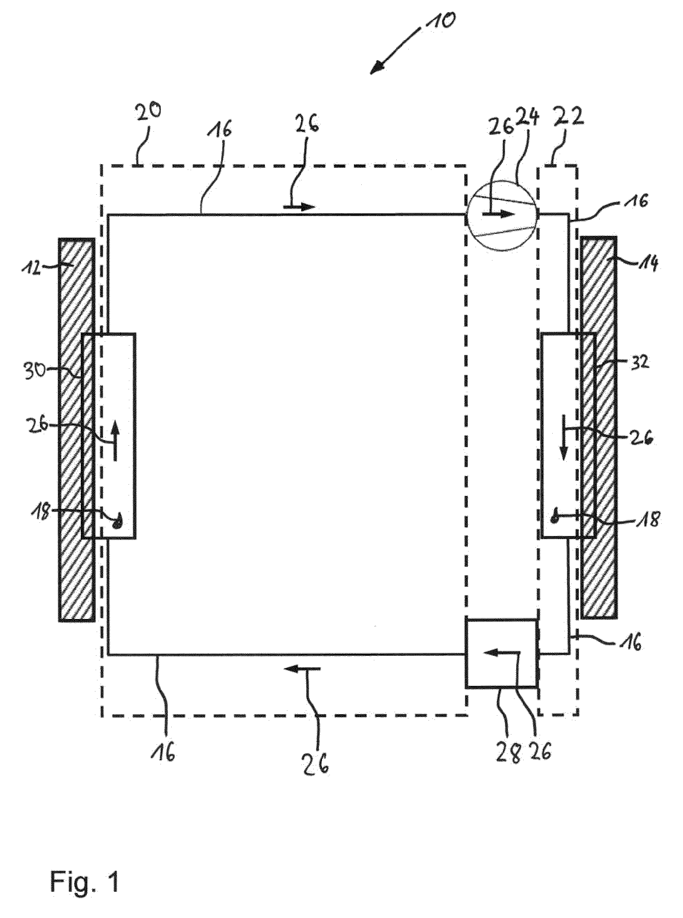

Die Fig. 1 zeigt als Stand der Technik einen Wärmepumpenkreislauf 10 bzw. Kältemediumkreislaufs einer Wärmepumpe mit einer Niedertemperatur-Wärmequelle 12 und einer Hochtemperatur-Wärmesenke 14. Der Wärmepumpenkreislauf 10 ist mit einer fluidleitenden, druckdichten Kreislaufleitung 16 gebildet, die von einem Kältemedium bzw. Fluid 18 durchströmt ist. Als Fluid 18 wird vorliegend bevorzugt ein so genanntes Sicherheitskältemittel verwendet. Dieses ist insbesondere ohne Fluorkohlenwasserstoffe (FCKW) zusammengesetzt. Besonders bevorzugt wird ein Propan-Kältemittel verwendet. Die Kreislaufleitung ist in einen Niedrigdruckbereich 20 und einen Hochdruckbereich 22 unterteilt. Die Unterteilung des Wärmepumpenkreislaufs 10 erfolgt an einem Verdichter 24, der die Kreislaufleitung 16 fluidleitend unterbricht. Der Verdichter 24 verdichtet das Kältemedium 18 von dem Niederdruckbereich 20 zu dem Hochdruckbereich 22 hin in einer Strömungsrichtung 26. Der Hochdruckbereich 22 ist von dem Niederdruckbereich 20 ferner mit einer Drossel 28 abgeteilt die ebenfalls die Kreislaufleitung 16 fluidleitend unterbricht.

Die Strömungsrichtung 26 innerhalb des Verdichters 24 gibt die Strömungsrichtung des Kältemediums 18 innerhalb des Wärmepumpenkreislaufs 10 vor.

Im Niederdruckbereich 20 ist ein Verdampfer 30 vorgesehen, der die Kreislaufleitung 16 zwischen der Drossel 28 und dem Verdichter 24 fluidleitend unterbricht. Der Verdampfer 30 ist bei der Niedertemperatur-Wärmequelle 12 angeordnet und entzieht der Niedertemperatur-Wärmequelle 12 thermische Energie. Im Hochdruckbereich 22 ist ein Verflüssiger 32 angeordnet, der die Kreislaufleitung 16 zwischen dem Verdichter 24 und dem Drossel 28 fluidleitend unterbricht. Der Verflüssiger 32 ist bei der Hochtemperatur-Wärmesenke 14 angeordnet und gibt dort thermische Energie an diese ab.

In dem Wärmepumpenkreislauf 10 nimmt der Verdampfer 30 thermische Energie von der Niedertemperatur-Wärmequelle 12 auf. Dabei wird das innerhalb des Verdampfers 30 vorhandene flüssige Kältemedium 18 verdampft. Das Kältemedium 18 wechselt dort also seinen Aggregatszustand von flüssig zu gasförmig. Das dann gasförmige Kältemedium 18 wird durch die Kreislaufleitung 16 hindurch zu dem Verdichter 24 geleitet. Der Verdichter 24 verdichtet das gasförmige Kältemedium 18 mittels mechanischer Arbeit, wobei das gasförmige Kältemedium 18 zusammengepresst bzw. komprimiert wird. Es steigen dabei der Druck und die Temperatur des gasförmigen Kältemediums 18. Das Energieniveau des Kältemediums 18 nimmt dabei zu. Der Verdichter 24 bestimmt ferner die Strömungsrichtung 26 innerhalb des Wärmepumpenkreislaufs 10 von nicht verdichtetem Kältemedium 18 zu verdichtetem Kältemedium 18. Dabei kann ausschließlich gasförmiges Kältemedium 18 verdichtet werden, da sich flüssiges Kältemedium 18 nicht zusammenpressen lässt.

Das verdichtete, gasförmige Kältemedium wird an den Verflüssiger 32 weitergeleitet. Der Verflüssiger 32 gibt thermische Energie von dem Kältemedium 18 an die Hochtemperatur-Wärmesenke 14 ab. Mit dem Abgeben der thermischen Energie aus dem gasförmigen Kältemedium 18 verflüssigt sich das Kältemedium 18. Das Kältemedium 18 wechselt also an dem Verflüssiger 32 den Aggregatszustand von gasförmig zu flüssig. Das flüssige Kältemedium 18 wird durch die Kreislaufleitung 16 zu der Drossel 28 transportiert. An der Drossel 28 wird das unter Druck stehende flüssige Kältemedium 18 entspannt. Mittels der Drossel 28 wird so der Druck des Kältemediums 18 vor der Drossel 28 zu dem Druck nach der Drossel 28 verringert. Von der Drossel 28 wird das flüssige Kältemedium 18 weiter zu dem Verdampfer 30 transportiert. Wenn das Kältemedium 18 wieder an dem Verdampfer 30 angekommen ist, ist der Wärmepumpenkreislauf 10 geschlossen.

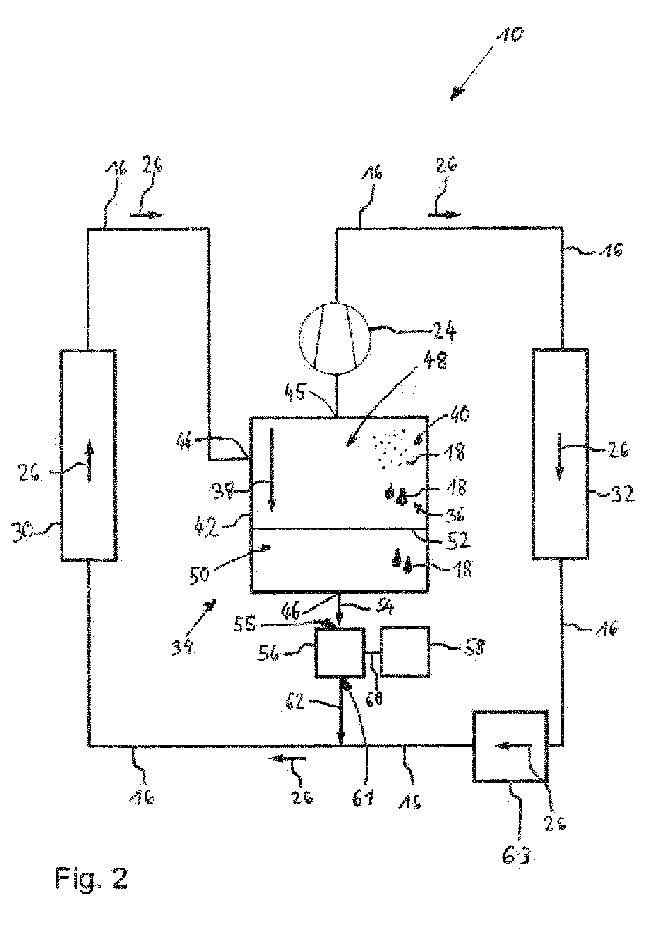

Die Fig. 2 zeigt einen erfindungsgemäßen Wärmepumpenkreislauf 10, bei dem ein Abscheider 34 vor dem Verdichter 24 angeordnet ist. Der Abscheider 34 trennt einen flüssigen Anteil 36 des Kältemediums 18 mittels Erdgravitation, deren Richtung durch einen Pfeil 38 angegeben ist, von einem gasförmigen Anteil 40 des Kältemediums 18 ab. Der Abscheider 34 ist mit einer druckdichten, zylinderförmigen Außenhülle 42 gestaltet, die sich in Richtung der Erdgravitation nach unten längserstreckt. Die Außenhülle 42 durchbrechend sind in deren oberen Bereich eine erste Zuführöffnung bzw. ein Eingang 44 und eine erste Abführöffnung 45 sowie in deren unteren Bereich eine zweite Abführöffnung bzw. ein Ausgang 46 vorgesehen. Innerhalb der Außenhülle 42 ist ferner im oberen Bereich des Abscheiders 34 ein Abscheideraum 48 und im unteren Bereich des Abscheiders 34 ein Sammelraum 50 gebildet. Zwischen dem Abscheideraum 48 und dem Sammelraum 50 liegt ein Pegel bzw. Flüssigkeitsstand 52 des dort abgeschiedenen und gesammelten Kältemediums 18.

An den Sammelraum 50 ist fluidleitend an die zweite Abführöffnung 46 eine Abscheiderleitung 54 angeschlossen, die an den ersten Einlassbereich 55 einer Pumpe 56 führt.

Die Pumpe 56 ist von einem Antrieb 58 angetrieben, der an die Pumpe 56 mit einem Übertragungselement 60 drehmomentenübertragend gekoppelt ist. Der Antrieb 58 ist dabei insbesondere als Elektromotor gestaltet.

Von der Pumpe 56 fliest das Kältemedium 18 durch einen Auslassbereich 61 in eine zweite Verbindungsleitungsleitung 62. Durch die zweite Verbindungsleitung 62 fliest das Kältemedium 18 dann weiter zu der Kreislaufleitung 16 zwischen dem Verflüssiger 32 und der Drossel 28. Insbesondere ist die Drossel 28 als ein Hochdruckregler 63 ausgeführt. Das Kältemedium 18 wird dort in die Kreislaufleitung 16 eingespeist. In der Kreislaufleitung 16 mischt sich dann der vom Abscheider 34 abgepumpte flüssige Anteil 36 des Kältemediums 18 mit dem Kältemedium 18, das von dem Hochdruckregler 63 zufließt.

Im Unterschied zu dem Wärmepumpenkreislauf 10 gemäß Fig. 1 ist bei dem Wärmepumpenkreislauf 10 gemäß Fig. 2 der Abscheider 34 nach dem Verdampfer 30 und vor dem Verdichter 24 angeordnet. Der Abscheider 34 trennt, wie oben bereits beschrieben, einen flüssigen Anteil 36 des Kältemediums 18 von dem ansonsten gasförmigen Anteil. Es gelangt also nur noch gasförmiges Kältemedium 18 in den Verdichter 24. Daher ist mit dem Abscheider 34 nicht mehr zwingend notwendig, dass in dem Verdampfer 30 ein vollständiger Übergang des Aggregatszustandes des Kältemediums 18 von flüssig zu gasförmig erfolgt. Der Verdampfer 30 gemäß Fig. 2 kann daher auch so ausgelegt werden, dass das Kältemedium 18 nach diesem Verdampfer 30 nur teilweise einen gasförmigen Aggregatszustand aufweist. Das Kältemedium 18 ist dann dort eine Mischung aus flüssigem Anteil 36 und aus gasförmigem Anteil 40. Diese Mischung von flüssigem Anteil 36 und gasförmigem Anteil 40 wird vor dem Verdichter 24 mittels des Abscheiders 34 getrennt. Dem Verdichter 24 wird aber, so wie erforderlich, ausschließlich gasförmiges Kältemedium 18 durch die Kreislaufleitung 16 von dem Abscheider 34 zugeführt. Das gasförmige Kältemedium 18 fließt dann, wie auch zu Fig. 1 beschrieben, durch den Verdichter 24 in Strömungsrichtung 26 im Wärmepumpenkreislauf 10 weiter.

Der flüssige Anteil 36 des im Abscheider 34 abgeschiedenen Kältemediums 18 sammelt sich im Sammelraum 50. Von dort wird das Kältemedium 18 mittels der Pumpe 56 durch die Abführöffnung 46 und die Abscheiderleitung 54 abgesaugt. Die Pumpe 56 transportiert das Kältemedium 18 durch die zweite Verbindungsleitung 62 zu der Kreislaufleitung 16. Das Kältemedium 18 wird dann in die Kreislaufleitung 16 zwischen der Drossel 28 und dem Verdampfer 30 eingespeist.

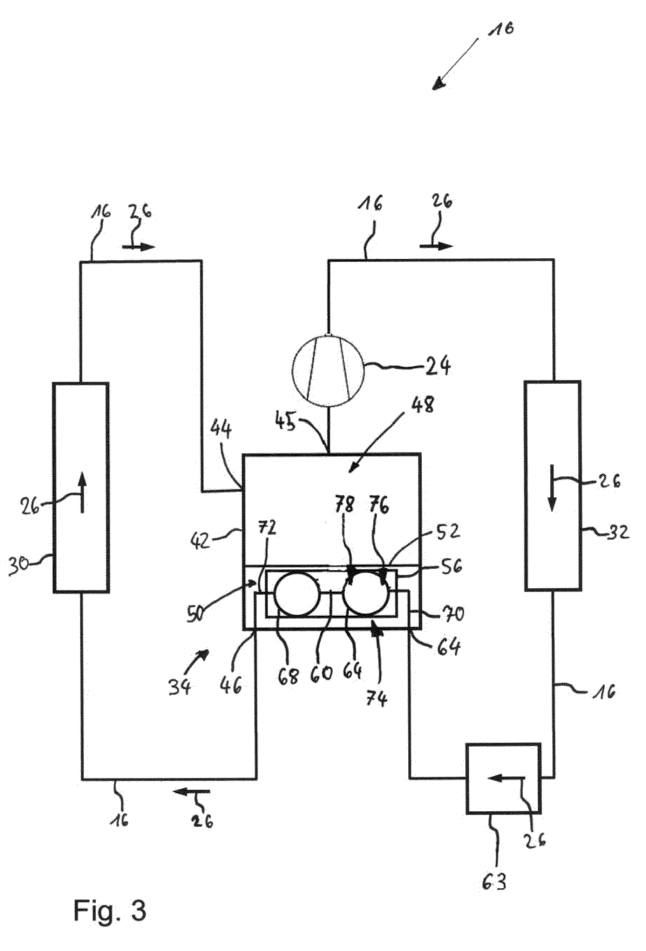

Fig. 3 zeigt den erfindungsgemäßen Wärmepumpenkreislauf 10 gemäß Fig. 2 mit einer Pumpe 56, die innerhalb des Abscheiders 34 angeordnet ist. Vorteilhaft ist die Pumpe 56 innerhalb der Außenhülle 42 des Abscheiders 34, insbesondere im Sammelraum 50, angeordnet. Der Abscheider 34 mit seiner dort integrierten Pumpe 56 unterbricht die Kreislaufleitung 16. Der Zufluss der Kreislaufleitung 16 ist an eine zweite Zuführöffnung 64 in der Außenhülle 42 des Abscheiders 34 angeschlossen. Der Ablauf der Kreislaufleitung 16 ist an die zweite Abführöffnung 46 angeschlossen.

Die Pumpe 56 ist mit einem ersten Pumpbereich 66 und einem zweiten Pumpbereich 68 gestaltet. Der erste Pumpbereich 66 der Pumpe 56 ist durch eine dritte Verbindungsleitung 70 mit der zweiten Zuführöffnung 64 verbunden. Der zweite Pumpbereich 68 ist durch eine vierte Verbindungsleitung 72 mit der zweiten Abführöffnung 46 fluidleitend verbunden. Das Kältemedium 18 strömt, von dem Verdichter 24 unter Druck gesetzt, zu dem ersten Pumpbereich 66. Der Druck des Kältemediums 18 wirkt für den ersten Pumpbereich 66 als Antrieb, so dass der erste Pumpbereich 66 also als ein Art Expansionsmotor 74 funktioniert. Der Expansionsmotor 74 weist dazu einen ersten Einlassbereich 76 und einen ersten Auslassbereich 78 auf. Der Expansionsmotor 74 ist drehmomentenübertragend mit dem Übertragungselement 60 an den zweiten Pumpbereich 68 gekoppelt. Der zweite Pumpbereich 68 saugt aus dem Sammelraum 50 des Abscheiders 34 das Kältemedium 18 an und pumpt es in Strömungsrichtung 26 in die Kreislaufleitung 16.

Vor dem Expansionsmotor 74 steht das Kältemedium 18 unter höherem Druck, als nach dem Expansionsmotor 74. Das Kältemedium 18 strömt daher dort selbsttätig durch den Expansionsmotor 74 und versetzt diesen in Bewegung.

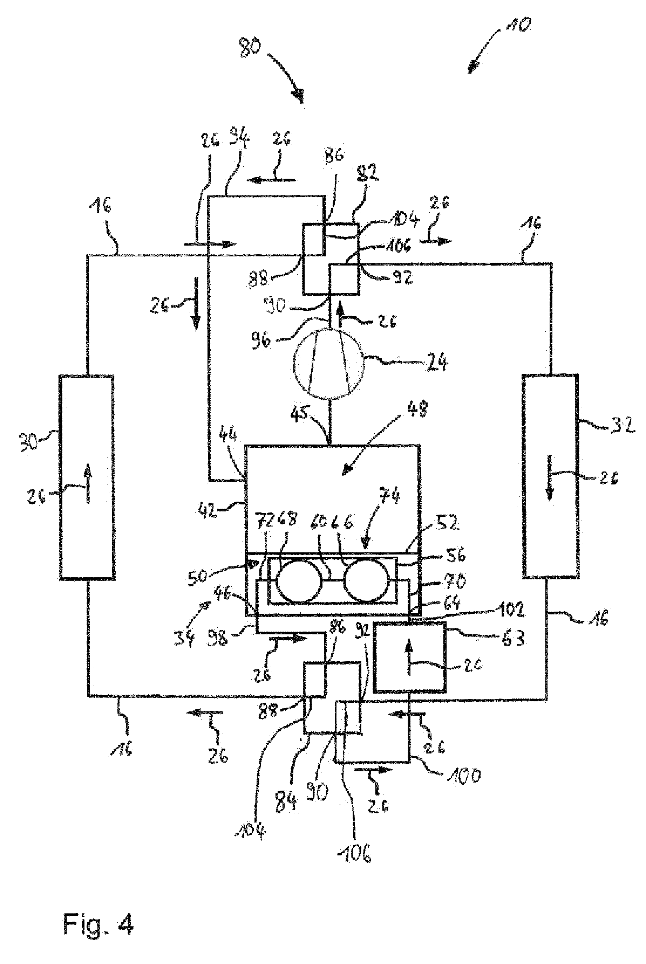

Die Fig. 4 zeigt den Wärmepumpenreislauf 10 im Heizbetrieb mit einer Umschalteinrichtung 80. Der Heizbetrieb ist der Normalbetrieb des Wärmepumpenkreislaufs 10. In dem Heizbetrieb wird, wie auch zu Fig. 1 beschrieben, thermische Energie aus der Niedertemperatur-Wärmequelle 12 aufgenommen und an die Hochtemperatur-Wärmesenke 14 abgebeben. Vorliegend kann beispielsweise die Hochtemperatur-Wärmesenke 14 eine Heizung eines Gebäudes sein.

Auch bei den Fig. 1 bis 3 befindet sich der Wärmepumpenreislauf 10 in einem Heizbetrieb. Das Kältemedium 18 strömt dabei wie erläutert in der Strömungsrichtung 26.

Die Umschalteinrichtung 80 ist mit einem ersten Umschaltelement 82 und einem zweiten Umschaltelement 84 gebildet. Das erste Umschaltelement 82 unterbricht die Kreislaufleitung 16 zwischen dem Verdampfer 30 und dem Abscheider 34, sowie die Kreislaufleitung 16 zwischen dem Verdichter 24 und dem Verflüssiger 32. Das zweite Umschaltelement 84 unterbricht die Kreislaufleitung 16 zwischen dem Hochdruckregler 63 und dem Verflüssiger 32 sowie zwischen dem Abscheider 34 und dem Verdampfer 30.

Bei den beiden Umschaltelementen 82 und 84 sind jeweils ein erster Anschluss 86, ein zweiter Anschluss 88, ein dritter Anschluss 90 und ein vierter Anschluss 92 ausgebildet. Der erste Anschluss 86 des ersten Umschaltelementes 82 ist an eine fünfte Verbindungsleitung 94, die zum Abscheider 34 führt, angeschlossen. Der zweite Anschluss 88 des ersten Umschaltelementes 84 ist an die Kreislaufleitung 16, vom Verdampfer 30 kommend, angeschlossen. Der dritte Anschluss 90 des ersten Umschaltelementes 84 ist an eine sechste Verbindungsleitung 96, vom Verdichter 24 kommend, angeschlossen und der vierte Anschluss 92 ist an die Kreislaufleitung 16 zum Verdampfer 30 hin angeschlossen.

Der erste Anschluss 86 des zweiten Umschaltelementes 84 ist an eine siebte Verbindungsleitung 98, die zur zweiten Abführöffnung 46 vom Abscheider 34 führt, angeschlossen. Der zweite Anschluss 88 des zweiten Umschaltelementes ist an die Kreislaufleitung 16 zum Verdampfer 30 hin führend angeschlossen. Der dritte Anschluss 90 des zweiten Umschaltelementes 84 ist an eine achte Verbindungsleitung 100, die zum Hochdruckregler 63 führt, angeschlossen. Der vierte Anschluss 92 des zweiten Umschaltelementes 84 ist an die Kreislaufleitung 16, vom Verdampfer 30 kommend, angeschlossen. Der Hochdruckregler 63 ist mit einer neunten Verbindungsleitung 102 mit der zweiten Zuführöffnung 64 in der Außenhülle 42 des Abscheiders 34 verbunden.

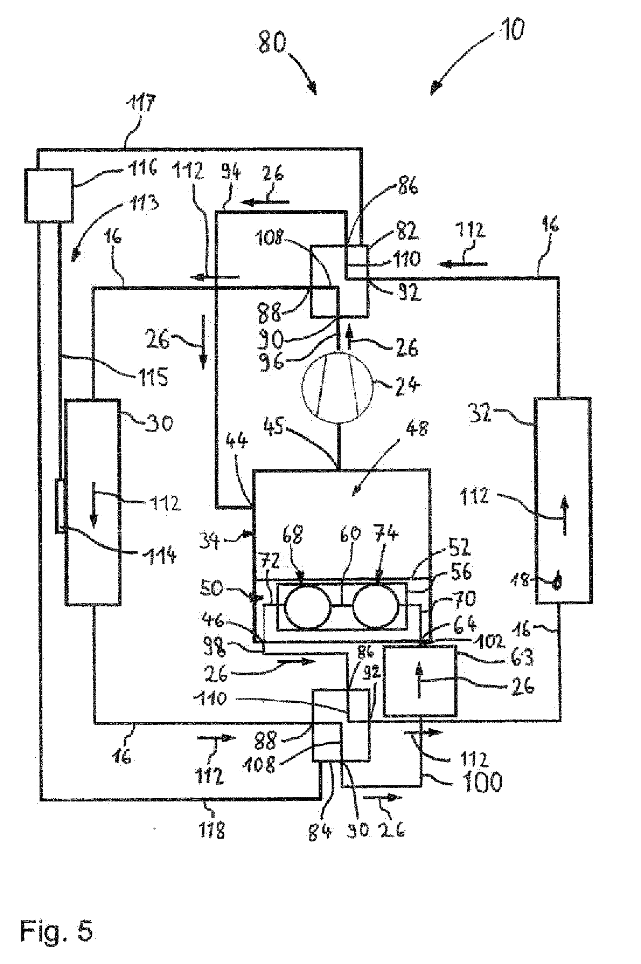

Innerhalb der beiden Umschaltelemente 82 und 84 sind jeweils ein erster Durchflussweg 104 und ein zweiter Durchflussweg 106 ausgebildet. Nach Umschalten der Umschaltelemente 82 und 84 sind jeweils, wie in Fig. 5 dargestellt, ein dritter Durchflussweg 108 und ein vierter Durchflussweg 110 gebildet. Der erster Durchflussweg 104 ist vom ersten Anschluss 86 zum zweiten Anschluss 88 und der zweiter Durchflussweg 106 vom dritten Anschluss 90 zum vierten Anschluss 92 ausgebildet.

Bei dem Wärmepumpenreislauf 10 gemäß Fig. 4 wirkt das dort oben sichtbare Umschaltelement 82 als ein so genanntes Gassteuerventil. Das Umschaltelement 82 kann daher auch durch ein Gassteuerventil gemäß dem Stand der Technik ersetzt sein. Im Gegensatz zu einem solchen Gassteuerventil gemäß dem Stand der Technik weist das Umschaltelement 82 jedoch im Durchmesser größere rohrförmige Anschlüsse 86, 88, 90, 92 auf. Die Anschlüsse 86, 88, 90, 92 sind vorteilhaft mit einem Durchmesser zwischen 12 und 32 mm (in Worten: zwölf und zweiunddreißig Millimeter), besonders vorteilhaft zwischen 17 und 27 mm (in Worten: siebzehn und siebenundzwanzig Millimeter), insbesondere mit einem Durchmesser von 22 mm (in Worten: zweiundzwanzig Millimeter), versehen.

Bei dem Wärmepumpenreislauf 10 gemäß Fig. 4 wirkt das dort unten sichtbare Umschaltelement 84 als ein so genanntes Flüssigkeitsventil. Das Umschaltelement 84 weist im Durchmesser kleinere rohrförmige Anschlüsse 86, 88, 90, 92 als das Umschaltelement 82 auf. Die Anschlüsse 86, 88, 90, 92 sind vorteilhaft mit einem Durchmesser zwischen 5 und 15 mm (in Worten: fünf und fünfzehn Millimeter), besonders vorteilhaft zwischen 7 und 13 mm (in Worten: sieben und dreizehn Millimeter), insbesondere mit einem Durchmesser von 10 mm (in Worten: zehn Millimeter), gestaltet.

Die Umschaltelemente 82, 84 trennen das Kältemedium 18 in dem Niederruckbereich 20 von dem Kältemedium 18 in dem Hochdruckbereich 22 ab. Der Niederdruckbereich 20 weist vorteilhaft einen Druck zwischen 0,8 und 6,0 bar (in Worten: null Komma acht und sechs Komma null bar) auf. Besonders vorteilhaft weist der Niederdruckbereich 20 einen Druck zwischen 1 und 3 bar (in Worten: ein und drei bar), insbesondere von 2 bar (in Worten: zwei bar), auf. Der Niederdruckbereich 20 weist vorteilhaft eine Temperatur von bis zu -40 °C (in Worten: minus vierzig Grad Celsius) auf. Besonders vorteilhaft weist der Niederdruckbereich 20 eine Temperatur von bis zu -35 °C (in Worten: minus fünfunddreißig Grad Celsius), insbesondere von bis zu -30 °C (in Worten: minus dreißig Grad Celsius), auf.

Der Hochdruckbereich 22 weist vorteilhaft einen Druck zwischen 2 und 35 bar (in Worten: zwei und fünfunddreißig bar) auf. Besonders Vorteilhaft weist der Hochdruckbereich 22 einen Druck von zwischen 4 und 20 bar (in Worten: vier und zwanzig bar) auf. Der Hochdruckbereich 22 weist bei dem Umschaltelement 82 vorteilhaft eine Temperatur von bis zu 110 °C (in Worten: einhundertzehn Grad Celsius) auf. Besonders vorteilhaft weist der Hochdruckbereich 22 bei dem Umschaltelement 84 eine Temperatur von bis zu 60 °C (in Worten: sechzig Grad Celsius) auf.

Die Fig. 5 zeigt den Wärmepumpenkreislauf 10 mit der umgeschalteten Umschalteinrichtung 80 im so genannten Abtaubetrieb. Dieser Abtaubetrieb ist aus folgenden Grund notwendig: Im erläuterten Heizbetrieb, insbesondere auch bei dem Wärmepumpenkreislauf 10 gemäß Fig. 4, kühlt sich der Verdampfer 30 aufgrund der Aufnahme von thermischer Energie mittels des Kältemediums 18 ab. An dem dann kalten Verdampfer 30 kann sich an dessen Außenseite Eis bilden. Dieses Eis an dem Verdampfer 30 wirkt wie eine Dämmschicht, die einen Wärmedurchgang von außen nach innen an dem Verdampfer 30 erschwert. Der Verdampfer 30 kann dann erschwert Wärme aufnehmen, aus z.B. Umgebungsluft als Niedertemperatur-Wärmequelle 12 in Fig. 1 dargestellt. Um die Dämmschicht von dem Verdampfer 30 zu entfernen, muss das Eis im Abtaubetrieb am Verdampfer 30 abgetaut werden.

Die umgeschaltete Umschalteinrichtung 80 hat den ersten Durchflussweg 104 in Fig. 4 dargestellt und zweiten Durchflussweg 106 in Fig. 4 dargestellt zu dem dritten Durchflussweg 108 und vierten Durchflussweg 110 umgeschaltet. Der dritten Durchflussweg 108 ist nun vom zweiten Anschluss 88 zum dritten Anschluss 90 und der vierte Durchflussweg 110 vom ersten Anschluss 86 zum vierten Anschluss 92 ausgebildet.

Mit dieser Änderung der Durchflusswege wird die erste Strömungsrichtung 26 in Teilen der Kreislaufleitung 16 in eine zweite Strömungsrichtung 112 geändert. Die zweite Strömungsrichtung 112 ist entgegengesetzt zu der ersten Strömungsrichtung 26. Die Strömungsrichtung 26 in den Verbindungsleitungen 94, 96, 98, 100 und 102 bleibt identisch. Somit bleibt auch die Strömungsrichtung 26 im Verdichter, im Abscheider 34 mit seiner integrierten Pumpe 56 und in dem Hochdruckregler 63 bei umgeschalteter Umschalteinrichtung 80 gleich. Die Strömungsrichtung im Verdampfer 30 und Verflüssiger 32 ändert sich hingegen zu der zweiten Strömungsrichtung 112.

Das Kältemedium 18 strömt beim Wärmepumpenkreislauf 10 gemäß Fig. 5 im Abtaubetrieb nicht mehr, wie im Heizbetrieb, vom Verdichter 24 zu dem Verflüssiger 32 mit der Strömungsrichtung 26, sondern vom Verdichter 24 zu dem Verdampfer 30 mit der Strömungsrichtung 112. Die Funktion des Verdampfers 30 wird wie folgt verändert: Der Verdampfer 30 wirkt während des Abtaubetriebs wie ein Verflüssiger. Dabei gibt der Verdampfer 30 thermische Energie ab. Die thermische Energie gelangt insbesondere auch in das an ihm gebildete Eis. Diese Wärmeabgabe an das Eis unterstützt so das Abtauen des Eises an der Außenseite des Verdampfers 30. Beim Umschalten vom Heizbetrieb in den Abtaubetrieb ändert sich die Strömungsrichtung auch im Verflüssiger 32 von der Strömungsrichtung 26 zu der Strömungsrichtung 112. Im Abtaubetrieb fließt das Kältemedium 18 vom Verflüssiger 32 zum Abscheider 34. Der Verflüssiger 32 wirkt während des Abtaubetriebs wie ein Verdampfer. Der Verflüssiger 32 nimmt thermische Energie auf.

Um zu ermitteln, wann die Strömungsrichtung 26 mittels der Umschalteinrichtung 80 geändert werden soll, ist eine Messeinrichtung 113 vorgesehen. Die Messeinrichtung 113 ist mit einem Sensor 114, der einen Vereisungsgrad am Verdampfer misst, und einer Sensorleitung 115 gebildet. Die Messeinrichtung 113 ist an eine Steuereinrichtung 116 angeschlossen. Die Steuereinrichtung 116 wertet ein Signal der Messeinrichtung 113 aus und schaltet mittels einer ersten Steuerleitung 117 das erste Umschaltelement 82 der Umschalteinrichtung 80 um. Zeitgleich wird mittels einer zweiten Steuerleitung 118 das zweite Umschaltelement 84 der Umschalteinrichtung 80 umgeschaltet. Insbesondere kann der Sensor 114 der Messeinrichtung 113 die Leistungsaufnahme des Verdichters 24 ermitteln.

Die Messeinrichtung 113 ist dazu vorgesehen, die Dicke des Eises am Verdampfer 30 und den daraus resultierenden Vereisungsgrad des Verdampfers 30 zu bestimmen. Die Messeinrichtung 113 ist mit dem Sensor 114 am Verdampfer 30 befestigt. Wenn der Sensor 114 im Zusammenwirken mit der Steuereinrichtung 116 ermittelt, dass die Dämmwirkung des Eises zu groß ist bzw. wird, wird der Wärmepumpenkreislauf 10 mittels der Umschalteinrichtung 80 vom Heizbetrieb in den Abtaubetrieb umgeschaltet. Welcher Vereisungsgrad ein Umschalten auslöst, ist in der Steuereinrichtung 116 gespeichert.

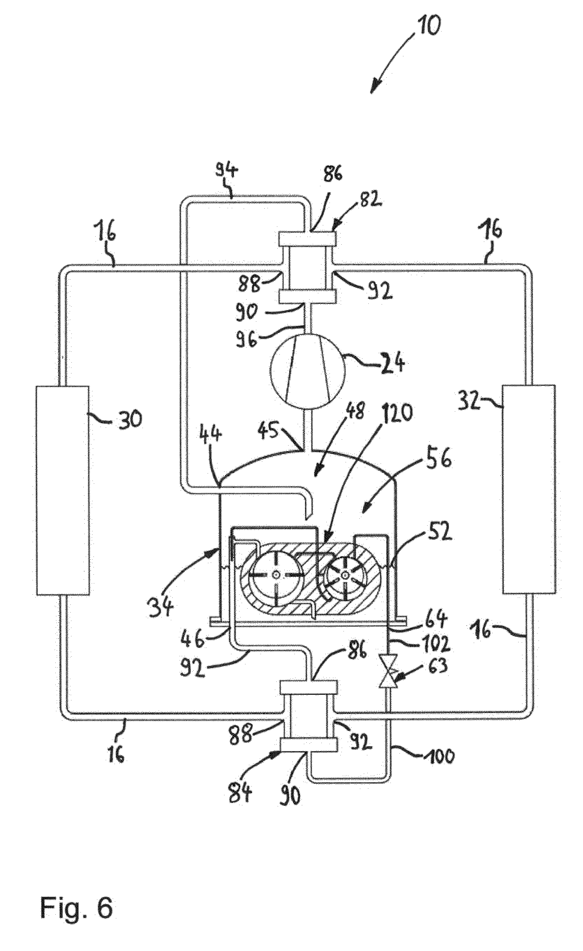

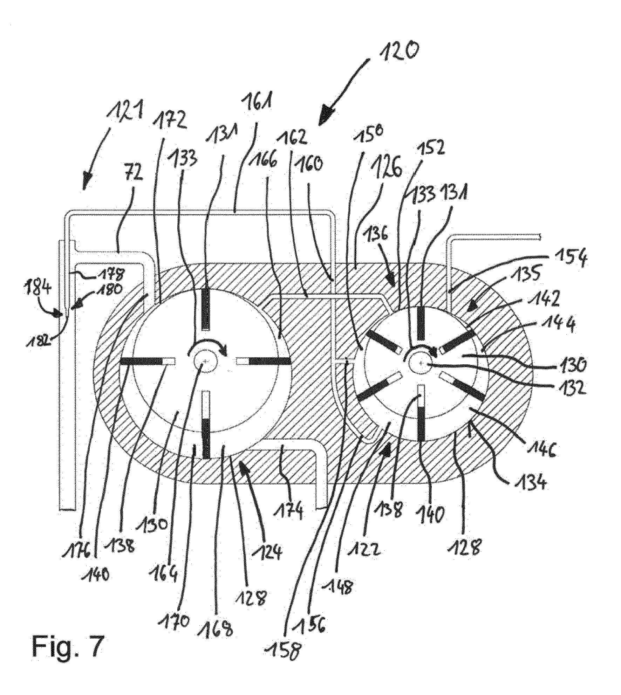

In Fig. 6 zeigt eine Detailübersicht eines Wärmepumpenkreislaufs 10 bei dem die im Abscheider 34 vorgesehene Pumpe 56 als eine Schieberpumpe 120 ausgeführt ist. Die Schieberpumpe 120 ist im Detail in Fig. 7 dargestellt.

Gemäß Fig. 7 weißt die Schieberpumpe 120 einen Ejektor 121 auf. Die Schieberpumpe 120 ist ferner mit einem ersten Drehschieberbereich bzw. Drehschieberraum 122 und mit einem zweiten Drehschieberbereich bzw. Drehschieberraum 124 gebildet. Der erste Drehschieberbereich 122 und der zweite Drehschieberbereich 124 sind insbesondere in einem Gehäuse 126 angeordnet.

Der ersten Drehschieberbereich 122 ist mit einem zylinderförmigen Hohlkörper 128 ausgebildet, in dem ein Rotor 130 auf einer ersten Welle 132 in einer Rotationsrichtung 133 rotierend gelagert ist. Die Welle 132 ist exzentrisch zu dem Hohlkörper 128 angeordnet. Der Rotor 130 berührt fast die Innenwand 134 des Hohlkörpers 128 an einem Berührpunkt 131. Der Berührpunkt 131 und der gegenüberliegende Punkt auf der Innenwand 134 des Hohlkörpers 128 unterteilen den Hohlkörper 128 in einen Saugbereich 135 und einen Druckbereich 136.

In den Rotor 130 sind mehrere Führungsnuten 138 ausgenommen, die radial zum Rotor 130 angeordnet sind. Innerhalb der Führungsnuten 138 sind rechteckige Drehschieber 140 gehaltert. Die Drehschieber 140 bewegen sich im Betrieb der Schieberpumpe 120 innerhalb der Führungsnuten 138 mittels einer durch die Rotation in Rotationsrichtung 133 des Rotors 130 erzeugten Fliehkraft nach außen. Die Drehschieber 140 legen sich dadurch an die Innenwand 134 des Hohlkörpers 128 dichtend an. Insbesondere werden die Drehschieber 140 mittels einer hier nicht dargestellten Feder in der Führungsnut 138 nach außen gedrückt.

Im ersten Drehschieberbereich 122 sind vorliegend sechs Führungsnuten 138 an dem Zylinder 130 mit sechs Drehschiebern 140 ausgebildet. Diese sechs Drehschieber 140 unterteilen den Raum zwischen dem Rotor 130 und dem Hohlkörper 128 in sechs Kammern 142, 144,146,148,150 und 152. Die erste Kammer 142 ist nach dem Berührpunkt 131 in Rotationsrichtung 133 nachfolgend im Saugbereich 135 gebildet.

Zu der ersten Kammer hin erstreckt sich durch das Gehäuse 126 hindurch, eine erste Zuflussöffnung 154. Aus der in Rotationsrichtung 133 gesehen vierten Kammer 148 und fünften Kammer 150 heraus führt eine erste Ausströmöffnung 156 und eine zweite Ausströmöffnung 158. Die beiden Ausströmöffnungen 156 und 158 vereinigen sich zu einer gemeinsamen ersten Abflussöffnung 160, die das Gehäuse 126 durchdringt. Dabei werden die beiden Ausströmöffnungen 156 und 158 innerhalb des Gehäuses 126 zu der ersten Abflussöffnung 160 zusammengeführt. An die Abflussöffnung 160 schließt sich eine erste Abflussleitung 161 an. Von der in Rotationsrichtung 133 gesehenen, sechsten Kammer 152 führt eine Verbindungsleitung 162 zu dem zweiten Drehschieberbereich 124.

Der zweite Drehschieberbereich 124 ist ähnlich wie der erste Drehschieberbereich 122 mit einem zylinderförmigen Hohlkörper 128 ausgestaltet, in dem ein Rotor 130 auf einer zweiten Welle 164 in Rotationsrichtung 133 rotierend gelagert ist. Die erste Welle 132 ist im ersten Drehschieberbereich 124 mit der zweiten Welle 164 im zweiten Drehschieberbereich momentenübertragend verbunden. Die erste Welle 132 und die zweite Welle 164 bilden so eine gemeinsame hier nicht dargestellte Pumpenwelle aus.

Im Unterschied zu dem ersten Drehschieberbereich 122 sind bei dem zweiten Drehschieberbereich 124 nicht sechs, sondern vier Führungsnuten 138 an dem dortigen Rotor 130 mit vier Drehschiebern 140 vorgesehen. Die vier Drehschieber 140 unterteilen entsprechend den Raum zwischen dem Rotor 130 und dem Hohlkörper 128 in vier Kammern 166, 168, 170 und 172. Die erste Kammer 166 ist in Rotationsrichtung 133 gesehen nach bzw. hinter dem zugehörigen Berührpunkt 131 nachfolgend im Saugbereich 135 ausgebildet.

Zu der ersten Kammer 166 hin erstreckt sich, bei einem zweiten Einlassbereich 167, die Verbindungsleitung 162 von dem ersten Drehschieberbereich 122. Zu der zweiten Kammer 168 erstreckt sich, bei einem ersten Einlassbereich 169 durch das Gehäuse 126 hindurch eine zweite Zuflussöffnung 174. Die zweite Zuflussöffnung 174 endet an ihrem anderen Ende im Abscheideraum 48 des Abscheiders 34 in Fig. 6 dargestellt. In der vierten Kammer 172 ist eine zweite Abflussöffnung 176 ausgebildet. Die zweite Abflussöffnung 176 schließt fluidleitend an die vierte Verbindungsleitung 72 an.

Die vierten Verbindungsleitung 72 wird mit der ersten Abflussleitung 161 mittels des Ejektors 121 zusammengefasst. Der Ejektor 121 ist dazu mit einem Treibrohr 178 ausgestaltet, das innerhalb der Verbindungsleitung 72 in einer Treibdüse 180 endet. Die Treibdüse 180 verengt die zugehörige Durchflussquerschnittsfläche des Treibrohres 178 zu einer Düsenöffnung 182. Die Düsenöffnung 182 und die verringert Durchflussquerschnittsfläche der vierten Verbindungsleitung 72 bilden einen Strömungsausgang 184 aus.

Bei der Schieberpumpe 120 rotiert in jedem der beiden Drehschieberbereiche 122 und 124 im zugehörigen Hohlkörper 128 je einer der beiden Rotoren 130 in Rotationsrichtung 133. In dem Rotor 130 befinden sich die Führungsnuten 138 in denen die Drehschieber 140 gehaltert sind. Die Drehschieber 140 werden aufgrund der durch die Rotation erzeugten Fliehkraft von dem Rotor 130 nach radial außen gedrängt und legen sich an die Innenwand 134 des Hohlkörpers 128 an. So bilden sich zwischen dem Rotor 130 und der Innenwand 134 des Hohlkörpers 128 Kammern aus. Diese Kammern sind in Umfangsrichtung von den Drehschiebern begrenzt. Da der Rotor 130 exzentrisch zum zugehörigen Hohlkörper 128 gelagert ist, verändert sich bei einer Rotation des Rotors 130 in Rotationsrichtung 133 das Volumen jeder einzelnen Kammer. Das Volumen der einzelnen Kammer vergrößert sich dann im Saugbereich 135. Im Druckbereich 136 verkleinert sich das Volumen der einzelnen Kammer während dieser Rotation in Rotationsrichtung 133.

Bei dem Drehschieberbereich 122, der als Expansionsmotor 74 gestaltet ist, wird das vom Verflüssiger 32 unter Druck zugeführte Kältemedium 18 in den Saugbereich 135 in die erste Kammer 142 mit Druck eingepresst. Das unter Druck stehende Kältemedium 18 versetzt dadurch den zugehörigen Rotor 130 in eine Rotationsbewegung in Rotationsrichtung 133. Das Kältemedium 18 wird dann im Druckbereich 136 des Drehschieberbereichs 122 aus der dorthin bewegten Kammer aus dem Drehschieberbereich 122 transportiert. Der Druck im das Kältemedium 18 abführenden Druckbereich 136 dieses Drehschieberbereichs 122 ist dabei geringer als der Druck im das Kältemedium 18 heranführenden Saugbereich 135 dieses Drehschieberbereichs 122.

Bei dem Drehschieberbereich 124, der als Pumpe 56 gestaltet ist, erfolgt ebenfalls eine Rotation in Rotationsrichtung 133 mittels des Antriebs 58. Der Antrieb 58 ist dazu hier vorteilhaft mittels des Expansionsmotors 74 ausgeführt. Die Rotation an der Pumpe 56 bewirkt, dass im Saugbereich 135 des Drehschieberbereichs 124 durch das dortige Vergrößern der Kammern während der Rotation das Kältemedium 18 angesaugt wird. Im Druckbereich 134 dieses Drehschieberbereichs 124 hingegen wird mit der Verkleinerung der Kammern das Kältemedium 18 aus dem Drehschieberbereich 124 herausgepresst.

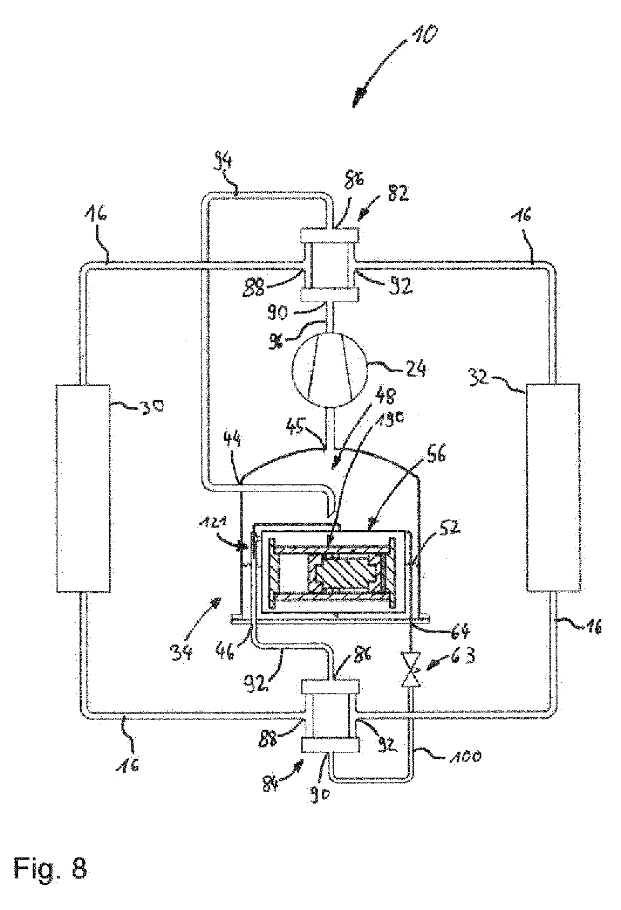

Die Fig. 8 zeigt einen Wärmepumpenkreislauf 10, bei dem die Pumpe 56 im Abscheider 34 als Kolbenpumpe 190 ausgeführt ist. Die Kolbenpumpe 190 ist dabei ebenfalls im Abscheideraum 48 des Abscheiders 34 angeordnet.

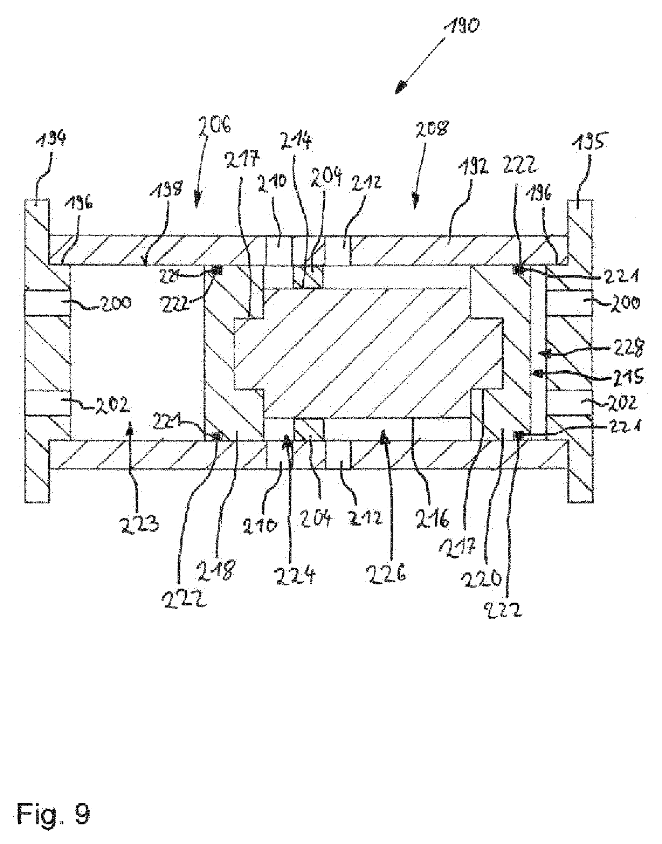

Die Fig. 9 zeigt die Kolbenpumpe 190 im Detail. Die Kolbenpumpe 190 ist mit einem Hohlzylinder 192 ausgebildet, der an seinen beiden offenen Enden jeweils mit einem Verschlussdeckel 194 und 195 verschlossen ist. Die Verschlussdeckel 194 und 195 weisen dabei an ihrem Außenrand je eine Stufe 196 aus. Die erste Stufe 196 der Verschlussdeckel 194 und 195 ist in an die Innenwand 198 des Hohlzylinders 192 angepasst. Die Verschlussdeckel 194 und 195 sind mit der Stufe 196 in den Hohlzylinders 192 eingefügt und dichten dort an einer Innenwand 198 ab. Dazu kann eine hier nicht dargestellte Dichtung vorgesehen sein. Die beiden Verschlussdeckel 194 und 195 durchdringend sind in diesen je eine Zuführöffnung 200 und eine Abführöffnung 202 ausgestaltet. An der Zuführöffnung 200 und an der Abführöffnung 202 sind vorzugsweise zwei, hier nicht dargestellte, Ventile angeordnet, die als Rückschlagventile wirkend je nach Durchflussrichtung öffnen oder schließen.

Der Hohlzylinder 192 ist innen mittig mit einer Abtrennscheibe 204 in zwei Hälften unterteilt. Die Abtrennscheibe 204 erstreckt sich parallel zu den Verschlussdeckeln 194 und im rechten Winkel zu der Innenwand 198. Die Abtrennscheibe 204 trennt den Hohlzylinder 192 also in eine erste Kammer 206 und in eine zweite Kammer 208. Den Hohlzylinder 192 durchdringend sind axial unmittelbar neben der Abtrennscheibe 204 zu der ersten Kammer 206 hin und der zweiten Kammer 208 hin eine erste Öffnung 210 bzw. eine zweite Öffnung 212 ausgebildet. An der Abtrennscheibe 204 selbst ist in deren Mitte eine Öffnung 214 vorgesehen.

Innerhalb des Hohlzylinders 192 ist ein Kolben 215 eingefügt. Der Kolben 215 ist aus einer Kolbenstange 216 und zwei Kolbenscheiben 218 und 220 gebildet. Die Kolbenstange 216 ist beweglich verschiebbar in der Öffnung 214 der Abtrennscheibe 204 eingepasst. Die Kolbenstange 216 ist mittels einer hier nicht dargestellten Abdichtung in der Öffnung 214 abgedichtet und gleitend gelagert. Die Kolbenstange 216 erstreckt sich also konzentrisch in Längsrichtung des Hohlzylinders 192 und verjüngt sich dabei an ihren beiden Ende je mit einer Stufe 217.

Auf diesen Stufe 217 ist formschlüssig je die erste Kolbenscheibe 218 bzw. die zweite Kolbenscheibe 220 ortsfest angekoppelt. Die beiden Kolbenscheiben 218 und 220 liegen dabei mit ihrer Umfangsseite bzw. Mantelfläche an der Innenwand 198 des Hohlzylinders 192 gleitend an. Bei beiden Kolbenscheiben 218 und 220 sind auf der zu dem Hohlzylinder 192 zugewandten Mantelfläche jeweils eine Nut 221 gebildet. In dieser Nut 221 ist ein Dichtring 222 um die jeweilige Kolbenscheibe 218 und 220 herum eingefügt, der die Kolbenscheiben 218 und 220 zu dem Hohlzylinder 192 abdichtet. Der Dichtring 222 ist so gestaltet, das ein Gleiten in dem Hohlzylinder 192 ermöglicht ist.

Die erste Kolbenscheibe 218 unterteilt die erste Kammer 206 in einen ersten Zylinderraum 223 und einen zweiten Zylinderraum 224. Der erste Zylinderraum 223 ist innerhalb des Hohlzylinders 192 zwischen dem Verschlussdeckel 194 und der ersten Kolbenscheibe 218 gebildet. Der zweite Zylinderraum 224 ist zwischen der ersten Kolbenscheibe 218 und der Abtrennscheibe 204 gebildet.

Die zweite Kolbenscheibe 220 unterteilt die zweite Kammer 208 in einen dritten Zylinderraum 226 und einen vierten Zylinderraum 228. Der dritte Zylinderraum 226 ist innerhalb des Hohlzylinders 192 zwischen der Abtrennscheibe 204 und der zweiten Kolbenscheibe 220 gebildet. Der vierte Zylinderraum 228 ist zischen der zweiten Kolbenscheibe 220 und dem zweiten Verschlussdeckel 195 gebildet. Innerhalb des zweiten und dritten Zylinderraums 224 bzw. 226 befindet sich die Kolbenstange 216, die mit ihrem Außendurchmesser das Volumen des zweiten Zylinderraums 224 beeinflusst.

Der zweite Zylinderraum 224 und der dritte Zylinderraum 226 bilden den ersten Pumpbereich 66, der als Expansionsmotor 74 wirkt, und der erste Zylinderraum 223 und der vierte Zylinderraum 228 bilden den zweiten Pumpbereich 68, der als Pumpe 56 wirkt.

In den zweiten Zylinderraum 224 und den dritten Zylinderraum 226 wird abwechselnd mittels eines (hier nicht dargestellten) Ventils das Kältemedium 18 vom Verflüssiger 32 unter Druck eingepresst. Das eingepresste Kältemedium 18 versetzt entsprechend den zugehörigen Kolben 215 in Bewegung. Ein in den zweiten Zylinderraum 224 gepresstes Kältemedium 18 bewirkt, dass sich der Kolben 215 innerhalb der Kolbenpumpe 190 von der Abtrennscheibe 204 weg in Richtung des Verschlussdeckels 194 bewegt.

Dadurch wird zugleich das Volumen im ersten Zylinderraum 222 und im dritten Zylinderraum 226 verkleinert. Aus dem ersten Zylinderraum 222 und dem dritten Zylinderraum 226 wird Kältemedium 18 herausgedrückt. Zeitgleich vergrößert sich das Volumen im vierten Zylinderraum 228. Kältemedium 18 wird dadurch in den vierten Zylinderraum 228 eingesaugt.

Fig. 9 zeigt jene Stellung, kurz bevor das Kältemedium 18 in den zweiten Zylinderraum 224 gepresst wird.

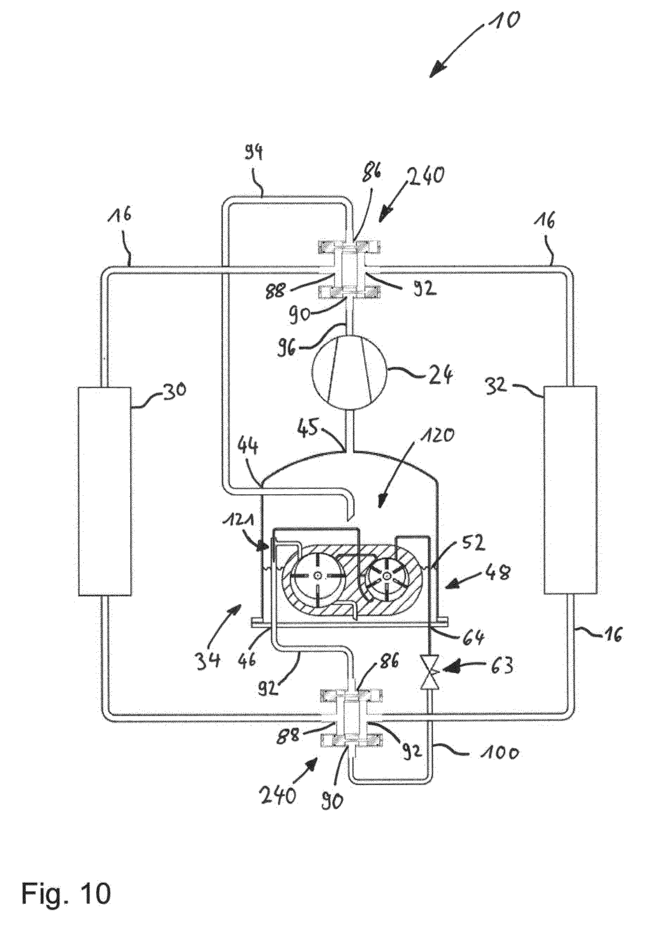

Die Fig. 10 zeigt einen Wärmepumpenkreislauf 10 bei dem die Umschaltelemente 82 und 84 als Vier-Wege-Ventilanordnungen 240 ausgeführt sind.

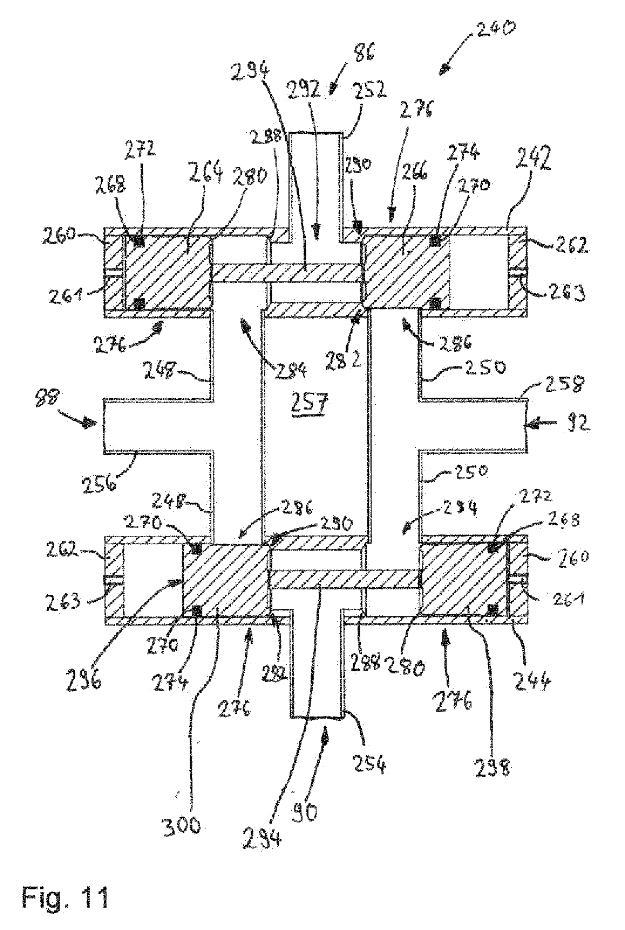

Fig. 11 zeigt eine solche Vier-Wege-Ventilanordnung 240 im Detail. Dort sind zwei hohlzylinderförmige Gehäuseelemente 242 und 244 im Wesentlichen parallel zueinander angeordnet. Zwischen dem Gehäuseelement 242 und dem Gehäuseelement 244 sind in Querrichtung rohrförmige Abstandsleitungen 248 und 250 ausgebildet. Die Abstandsleitungen 248 und 250 erstrecken sich ebenfalls im Wesentlichen parallel zueinander und verbinden die beiden Gehäuseelemente 242 und 244 fluidleitend miteinander. In der Mitte der Längsausdehnung der beiden Gehäuseelemente 242 und 244 ist dort je ein nach außen gerichtetes Anschlusselement 252 und 254 angeordnet. Ebenso ist etwa in der Mitte der Längsausdehnung der beiden Abstandsleitungen 248 und 250 jeweils ein nach außen gerichtetes Anschlusselement 256 und 258 angeordnet. Die beiden Abstandsleitungen 248 und 250 sind in Bezug auf die Längsrichtung der Gehäuseelemente 242 und 244 voneinander mindestens so weit beabstandet, wie die Anschlusselemente 252 und 254 in dieser Richtung breit sind.

Der Abstand zwischen den beiden Gehäuseelementen 242 und 244 ist so groß gewählt, dass dieser Abstand das 1,5- bis 2-fache, besonders bevorzugt das 3-bis 5-fache des Durchmesser der Anschlusselemente 252, 254, 256 und 258 ausmacht. Ein auf diese Weise zwischen den Gehäuseelementen 242 und 244 bzw. den Abstandsleitungen 248 und 250 gebildeter Zwischenraum 257 ist mit einem (nicht näher dargestellten) dämmenden Material ausgefüllt. Die Anordnung der Gehäuseelemente 242 und 244 und der Abstandsleitungen 248 und 250 bildet in der Ansicht gemäß Fig. 11 ein Rechteck aus.

Das Gehäuseelement 242 ist an seinen beiden Enden mit jeweils einer Verschlussscheibe 260 und 262 dicht verschlossen. Die Verschlussscheiben 260 und 262 durchdringend ist jeweils eine Zugangsöffnung 261 und 263 ausgestaltet.

Die Verschlussscheiben 260 und 262 sind ortsfest abdichtend in das Gehäuseelement 242 eingepasst. Den Verschlussscheiben 260 und 262 zur Mitte der Längsausdehnung des Gehäuseelementes 242 hin folgend sind zwei zylinderförmige Schaltelemente bzw. Ventilkörper 264 und 266 in das Gehäuseelement 242 eingepasst. Die Außendurchmesser der Schaltelemente 264 und 266 sind dabei geringfügig kleiner gestaltet, als der Innendurchmesser des Gehäuseelementes 242. Dies ermöglicht ein Gleiten der Schaltelemente 264 und 266 im Hohlraum des Gehäuseelementes 242.

Die Zugangsöffnung 261 und 263 sind dafür vorgesehen, dass mittels eines (hier nicht dargestellten) Magnet-Ventils durch sie hindurch ein Fluid zuzuführen ist. Mit diesem Fluid kann dann auf die sich im Gehäuseelement 242 befindenden Schaltelemente 264 und 266 eingewirkt werden, um diese zu verstellen. Die Schaltelemente 264 und 266 wirken dann zugleich als "Arbeitskolben".

Bei den Schaltelementen 264 und 266 sind auf der Seite der Verschlussscheiben 260 und 262 jeweils zwei zum Außenradius der Schaltelemente 264 und 266 hin offene, umlaufende Nuten 268 und 270 ausgebildet. In den Nuten 268 und 270 ist je ein ringförmiges Dichtmittel 272 bzw. 274 eingepasst. Die Dichtmittel 272 und 274 dichten die Schaltelemente 264 und 266 zu der Innenwand des Gehäuseelementes 242 hin ab.

In Längsrichtung der Schaltelemente 264 und 266 ist zur Mitte des Gehäuseelementes 242 hin folgend ferner dort eine geringe Verjüngung 276 des Außendurchmessers der Schaltelemente 264 und 266 ausgebildet. Die Längsausdehnung dieser Verjüngung 276, in der die Schaltelemente 264 und 266 verjüngt sind, ist größer als die Breite, insbesondere der Innendurchmesser, der beiden Abstandsleitungen 248 und 250.

Die beiden einander zugewandten radial äußeren Kanten der Schaltelemente 264 und 266 sind abgerundet gestaltet und bilden Auflageflächen 280 und 282 aus, mittels denen die Schaltelemente 264 gegen einen Ventilsitz 288 bzw. 290 abdichten können.

Das Schaltelement 264 ist in der Darstellung gemäß Fig. 11 in einer Lage bzw. Stellung, bei der es in dem Gehäuseelement 242 bei bzw. in der Nähe der Verschlussscheibe 260 angeordnet ist. Neben dem Schaltelement 264 mündet dann eine Durchgangsöffnung 284, die zu der Abstandsleitung 248 gehört. Das Schaltelement 266 ist in dieser Lage von der Verschlussscheiben 262 weg angeordnet. Dann ist eine zur Abstandsleitung 250 gehörende Durchgangsöffnung 286 am Gehäuseelement 242 so angeordnet, dass sie von der Verjüngung 276 des Außendurchmessers des Schaltelements 266 überlappt ist.

Im Zentrum des Gehäuseelementes 242 ist dieses innen schließlich umlaufend phasenförmige im Durchmesser verkleinert. Diese Verkleinerung des Innendurchmessers des Gehäuseelements 242 bildet zwei Ventilsitze 288 und 290 aus. Die beiden Ventilsitze 288 und 290 sind so gestaltet, dass sie bei einem Anliegen der jeweiligen Auflageflächen 280 und 282 mit den zugehörigen Schaltelementen 264 und 266 abdichten. Zwischen den beiden Ventilsitzen 288 und 290 befindet sich dann eine zum Anschlusselement 252 gehörende Durchgangsöffnung 292.

Beide Schaltelemente 264 und 266 sind zur Mitte des Gehäuseelementes 242 hin mit einer zylinderförmigen Verbindungsstange 294 ortsfest verbunden. Die Schaltelemente 264 und 266 und die Verbindungsstange 294 bilden zusammen ein Kolbenelement 296 aus. Die Länge der Verbindungsstange 294 ist so bemessen, dass, bei Anliegen der Auflagefläche 282 des Schaltelements 266 an dem Ventilsitz 290, das Schaltelement 264 die Durchgangsöffnung 284 vollständig freigibt. Das Schaltelement 264 ist dann wie in Fig. 11 dargestellt bei der Verschlussscheibe 260 angeordnet.

Das Gehäuseelement 244 ist gemäß der Fig. 11 punktsymmetrisch zu dem Gehäuseelement 242 gestaltet. Entsprechend ist dort ein drittes Schaltelement bzw. ein dritter Ventilkörper 298 vorgesehen, der einen Durchfluss zwischen dem dritten Anschluss 90 und dem vierten Anschluss 92 erlaubt. Ferner ist ein viertes Schaltelement bzw. ein vierter Ventilkörper 300 vorgesehen, der einen Durchfluss zwischen dem dritten Anschluss 90 und dem zweiten Anschluss 88 verhindern kann. Vorzugsweise sind die Schaltelemente 264, 266, 298 und 300 aus einem Material mit einer niedrigen Wärmeleitfähigkeit hergestellt.

Mit der derartigen Anordnung der Gehäuseelemente 242 und 244 und der diese voneinander beabstandenden Abstandsleitungen 248 und 250 ist eine thermische Trennung der Durchflusswege 104, 106, 108 und 110 innerhalb der Vier-Wege-Ventilanordnung 240 geschaffen. Diese thermische Trennung wird durch die niedrigen Wärmeleitfähigkeiten der Schaltelemente 264, 266, 298 und 300 zusätzlich verbessert.

Die thermische Trennung wirkt als Wärmesperre zwischen den jeweiligen aktiven Durchflusswegen 104, 106, 108 und 110. Es wird so weniger thermische Energie zwischen den in den Durchflusswegen fliesenden Kältemedien 18 ausgetauscht. Das vermindert thermische Verluste, was die Effizienz im Wärmepumpenkreislauf 10 steigert.

Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

### Bezugszeichenliste

- 10: Wärmepumpenkreislauf
- 12: Niedertemperatur-Wärmequelle
- 14: Hochtemperatur-Wärmesenke
- 16: Kreislaufleitung
- 18: Kältemedium
- 20: Niedrigdruckbereich
- 22: Hochdruckbereich
- 24: Verdichter
- 26: Strömungsrichtung
- 28: Drossel
- 30: Verdampfer
- 32: Verflüssiger
- 34: Abscheider
- 36: flüssiger Anteil
- 38: Pfeil
- 40: gasförmiger Anteil
- 42: Außenhülle
- 44: Zuführöffnung
- 45: erste Abführöffnung
- 46: zweite Abführöffnung
- 48: Abscheideraum
- 50: Sammelraum
- 52: Flüssigkeitsstand
- 54: Abscheiderleitung
- 55: Einlassbereich
- 56: Pumpe
- 58: Antrieb
- 60: Übertragungselement
- 61: Auslassbereich
- 62: zweite Verbindungsleitungsleitung
- 63: Hochdruckregler
- 64: zweite Zuführöffnung
- 66: erster Pumpbereich
- 68: zweiter Pumpbereich
- 70: dritte Verbindungsleitung
- 72: vierte Verbindungsleitung
- 74: Expansionsmotor
- 76: Einlassbereich
- 78: Auslassbereich
- 80: Umschalteinrichtung
- 82: Umschaltelement
- 84: Umschaltelement
- 86: erster Anschluss
- 88: zweiter Anschluss
- 90: dritter Anschluss
- 92: vierter Anschluss
- 94: fünfte Verbindungsleitung
- 96: sechste Verbindungsleitung
- 98: siebte Verbindungsleitung
- 100: achte Verbindungsleitung
- 102: neunte Verbindungsleitung
- 104: erster Durchflussweg
- 106: zweiter Durchflussweg
- 108: dritter Durchflussweg
- 110: vierter Durchflussweg
- 112: zweite Strömungsrichtung
- 113: Messeinrichtung
- 114: Sensor
- 115: Sensorleitung
- 116: Steuereinrichtung
- 117: erste Steuerleitung
- 118: zweite Steuerleitung
- 120: Schieberpumpe
- 121: Ejektor
- 122: Drehschieberbereich
- 124: Drehschieberbereich
- 126: Gehäuse
- 128: Hohlkörper
- 130: Rotor
- 131: Berührpunkt
- 132: erste Welle
- 133: Rotationsrichtung
- 134: Innenwand
- 135: Saugbereich
- 136: Druckbereich
- 138: Führungsnut
- 140: Drehschieber
- 142: erste Kammer
- 144: zweite Kammer
- 146: dritte Kammer
- 148: vierte Kammer
- 150: fünfte Kammer
- 152: sechste Kammer
- 154: erste Zuflussöffnung
- 156: erste Ausströmöffnung
- 158: zweite Ausströmöffnung
- 160: Abflussöffnung
- 161: erste Abflussleitung
- 162: Verbindungsleitung
- 164: zweite Welle
- 166: erste Kammern
- 167: zweiter Einlassbereich
- 168: zweite Kammern
- 169: erster Einlassbereich
- 170: dritte Kammern
- 172: vierte Kammern
- 174: zweite Zuflussöffnung
- 176: zweite Abflussöffnung
- 178: Treibrohr
- 180: Treibdüse
- 182: Düsenöffnung
- 184: Strömungsausgang
- 190: Kolbenpumpe
- 192: Hohlzylinder
- 194: Verschlussdeckel
- 195: Verschlussdeckel
- 196: Stufe
- 198: Innenwand
- 200: Zuführöffnung
- 202: Abführöffnung
- 204: Abtrennscheibe
- 206: erste Kammer
- 208: zweite Kammer
- 210: erste Öffnung
- 212: zweite Öffnung
- 214: Öffnung
- 215: Kolben
- 216: Kolbenstange
- 217: Stufe
- 218: erste Kolbenscheibe
- 220: zweite Kolbenscheibe
- 221: Nut
- 222: Dichtring
- 223: erster Zylinderraum
- 224: zweiter Zylinderraum
- 226: dritter Zylinderraum
- 228: vierter Zylinderraum
- 240: Vier-Wege-Ventilanordnung
- 242: Gehäuseelement
- 244: Gehäuseelement
- 248: Abstandsleitung
- 250: Abstandsleitung
- 252: Anschlusselement
- 254: Anschlusselement
- 256: Anschlusselement
- 258: Anschlusselement
- 257: Zwischenraum
- 260: Verschlussscheibe
- 261: Zugangsöffnung
- 262: Verschlussscheibe
- 263: Zugangsöffnung
- 264: Schaltelement
- 266: Schaltelement
- 268: Nut
- 270: Nut
- 272: Dichtmittel
- 274: Dichtmittel
- 276: Verjüngung
- 280: Auflagefläche
- 282: Auflagefläche
- 284: Durchgangsöffnung
- 286: Durchgangsöffnung
- 288: Ventilsitz
- 290: Ventilsitz
- 292: Durchgangsöffnung
- 294: Verbindungsstange
- 296: Kolbenelement
- 298: Schaltelement
- 300: Schaltelement

## Patentansprüche

1. Vier-Wege-Ventilanordnung (240) mit einem ersten Durchflussweg (104) und einem zweiten Durchflussweg (106),
**dadurch gekennzeichnet, dass** der erste Durchflussweg (104) vom zweiten Durchflussweg (106), thermisch getrennt ist.

2. Vier-Wege-Ventilanordnung nach Anspruch 1,
**dadurch gekennzeichnet, dass** ein dritter Durchflussweg (108) und ein vierter Durchflussweg (110) gestaltet ist, die ebenfalls thermisch getrennt sind.

3. Vier-Wege-Ventilanordnung nach Anspruch 1 oder 2,
**dadurch gekennzeichnet, dass** ein erster, zweiter, dritter und vierter Anschluss vorgesehen (86, 88, 90 und 92) ist, wobei der erste Durchflussweg (104) vom ersten zum zweiten Anschluss (86 und 88), der zweite Durchflussweg (106) vom dritten zum vierten Anschluss (90 und 92), der dritte Durchflussweg (108) vom ersten zum vierten Anschluss (86 und 92) und der vierte Durchflussweg (110) vom zweiten zum dritten Anschluss (88 und 90) führt.

4. Vier-Wege-Ventilanordnung nach Anspruch 3,
**dadurch gekennzeichnet, dass** ein erstes Schaltelement (264) in einer ersten Schaltstellung den ersten Anschluss (86) öffnet und ein zweites Schaltelement (266) den dritten Anschluss (90) verschließt.

5. Vier-Wege-Ventilanordnung nach Anspruch 4,
**dadurch gekennzeichnet, dass** das erstes Schaltelement (264) und das zweites Schaltelement (266) gemeinsam bewegbar, insbesondere verschiebbar gestaltet sind.

6. Vier-Wege-Ventilanordnung nach einem der Ansprüche 3 bis 5,
**dadurch gekennzeichnet, dass** ein drittes Schaltelement (298) in einer ersten Schaltstellung den dritten Anschluss (90) öffnet und ein viertes Schaltelement (298) den ersten Anschluss (86) verschließt.

7. Vier-Wege-Ventilanordnung nach Anspruch 6,
**dadurch gekennzeichnet, dass** das dritte Schaltelement (298) und das vierte Schaltelement (300) gemeinsam bewegbar, insbesondere verschiebbar gestaltet sind.

8. Vier-Wege-Ventilanordnung nach einem der Ansprüche 4 bis 7,
**dadurch gekennzeichnet, dass** mindestens eines der Schaltelemente (264, 266, 298 und 300) mit einem Kolbenelement (296) gestaltet ist.

9. Vier-Wege-Ventilanordnung nach Anspruch 8,
**dadurch gekennzeichnet, dass** das Kolbenelement (296) mit einem thermisch dämmenden Material gestaltet ist.

10. Verwenden einer Vier-Wege-Ventilanordnung nach einem der Ansprüche 1 bis 9 in einem Wärmepumpenkreislauf.
